# NEUE EUROPÄISCHE PATENTSCHRIFT

(11) **EP 1 731 395 B2**
(45) Veröffentlichungstag und Bekanntmachung des Hinweises auf die Entscheidung über den Einspruch: **20.04.2016**
(45) Hinweis auf die Patenterteilung: 28.07.2010
(21) Anmeldenummer: 06010661.4
(22) Anmeldetag: 24.05.2006
(51) Int. Cl.: B60T 17/00

(54) **Druckluftversorgungseinrichtung**
Air pressure supply system
Installation d'alimentation en air comprimé

(30) Priorität: 08.06.2005 DE 102005026343
(43) Veröffentlichungstag der Anmeldung: 13.12.2006
(73) Patentinhaber: KNORR-BREMSE Systeme für Nutzfahrzeuge GmbH, 80809 München (DE)
(72) Erfinder: Hilberer, Eduard, 68766 Hockenheim (DE); Krockenberger, Klaus, 90547 Stein (DE)
(74) Vertreter: Schumacher & Willsau

(56) Entgegenhaltungen:
- EP-A- 0 976 636
- EP-A- 1 464 556
- WO-A1-2006/045489
- DE-A1- 10 333 610
- DE-A1- 19 835 638
- US-A1- 2004 141 853

## Beschreibung

Die Erfindung betrifft eine Druckluftversorgungseinrichtung gemäß dem Oberbegriff des unabhängigen Anspruchs.

Luftaufbereitungsanlagen dienen dazu, dem Bremssystem und sonstigen Druckluftverbrauchem von Nutzkraftfahrzeugen aufbereitete, das heißt insbesondere getrocknete, Druckluft zuzuführen. Die Trocknung der von einem Kompressor gelieferten Druckluft erfolgt in einer Trocknereinheit, die an der Oberseite eines Ventilgehäuses angeordnet ist. Das Ventilgehäuse beherbergt Komponenten, die für die Druckluftversorgung wesentlich sind, beispielsweise einen Druckregler, eine Mehrkreisschutzventilanordnung und eine elektronische Steuereinheit.

Es sind solche Luftaufbereitungsanlagen bekannt, deren wesentliche Aufgabe, neben der Trocknung und Reinigung der Luft, darin besteht, das Bremssystem eines Nutzkraftfahrzeugs mit Druckluft zu versorgen. Neben dem Bremssystem sind in Nutzkraftfahrzeugen aber im Allgemeinen auch weitere Druckluftverbraucher vorgesehen, beispielsweise eine Luftfederung. Das Bremssystem selbst gliedert sich in zahlreiche Komponenten, beispielsweise unterteilt auf Zugfahrzeug und Anhänger sowie die Feststellbremsen. Da bei der Druckluftversorgung verschiedener Verbraucher vergleichbare Aufgaben zu lösen sind, liegt ein allgemeines Bestreben dahingehend vor, die zur Lösung der Aufgaben verwendeten Komponenten weitgehend zu integrieren. Dem gegenüber ist man aber auch bestrebt, die Druckluftversorgungseinrichtungen für Nutzkraftfahrzeuge bezüglich ihrer Baugröße zu begrenzen, insbesondere, um bei üblicher Anordnung der Druckluftversorgungseinrichtung eine ausreichende Bodenfreiheit des Nutzkraftfahrzeugs sicherzustellen. Dies wird dadurch erschwert, dass sich die Bauhöhen von Ventilgehäuse und Trocknereinheit addieren, da die Trocknereinheit üblicherweise auf der Oberseite der Luftaufbereitungsanlage angeordnet ist.

Eine Luftaufbereitungsanlage ist aus der Veröffentlichung EP 0 976 636 A2 bekannt. Eine gattungsgemäße Luftaufbereitungsanlage ist aus der US 2004/0141853 A1 bekannt.

Der Erfindung liegt die Aufgabe zugrunde, eine Druckluftversorgungseinrichtung zur Verfügung zu stellen, die ein hohes Maß an Integration realisiert, sich in bequemer Weise warten lässt und den baulichen Randbedingungen herkömmlicher Nutzfahrzeuge angepasst ist.

Diese Aufgabe wird mit den Merkmalen des unabhängigen Anspruches gelöst.

Vorteilhafte Ausführungsformen der Erfindung sind in den abhängigen Ansprüchen angegeben.

Erfindungsgemäß ist vorgesehen, dass an dem Ventilgehäuse mindestens ein Modul seitlich über mindestens eine Flanschverbindung angeordnet ist und dass die mindestens eine Flanschverbindung eine elektrische und eine pneumatische Schnittstelle zwischen der Luftaufbereitungsanlage und dem mindestens einen Modul zur Verfügung stellt. Aufgrund der seitlichen Anordnung des Moduls an der Luftaufbereitungsanlage wird eine übermäßige Bauhöhe der Druckluftversorgungseinrichtung vermieden, wobei insbesondere eine ausreichende Bodenfreiheit des Nutzfahrzeugs sichergestellt ist. Die seitliche Flanschverbindung stellt eine elektrische und eine pneumatische Schnittstelle zur Verfügung, so dass die Verbindung zwischen Modul und Luftaufbereitungsanlage in einfacher Weise hergestellt und gelöst werden kann. Dies ermöglicht auch eine Reparatur beziehungsweise Wartung der Anlage im Feld.

Nützlicherweise ist vorgesehen, dass das Modul ein ELGModul ist, das heißt ein Modul für eine elektronische Steuerung einer Luftfederung.

Alternativ oder zusätzlich kann vorgesehen sein, dass das Modul ein ECPB-Modul ist, das heißt ein Modul für eine elektronische Steuerung einer Feststellbremse.

Die Steuerung der Luftfederung und die Steuerung der Feststellbremse sind wichtige Aufgaben, die im Nutzkraftfahrzeug zu lösen sind.

In diesem Zusammenhang ist es besonders nützlich, dass in dem Ventilgehäuse der Luftaufbereitungsanlage eine elektronische Steuerung vorgesehen ist, die Steuerfunktionen für die Luftaufbereitungsanlage und für das Modul wahmimmt. Hierdurch gelingt es, die elektronische Steuerung des Moduls einfach zu gestalten oder ganz auf sie zu verzichten. Die elektronische Steuerung der Luftaufbereitungsanlage ist in der Lage, diese Steuerungsaufgaben des Moduls zu übernehmen. Steuersignale beziehungsweise von einer Sensorik des Moduls erfasste Signale werden über die elektrische Schnittstelle übermittelt. Über pneumatische Verbindungen der pneumatischen Schnittstelle kann Druckluft zu Steuerungszwecken und zur Lieferung an den Verbraucher überströmen.

Erfindungsgemäß ist in dem Modul eine elektronische Steuerung vorgesehen, die Steuerfunktionen für das Modul wahrnimmt. Insbesondere für Steuerfunktionen, die nicht ohne Weiteres in die Elektronik der Luftaufbereitungsanlage implementiert werden können, beziehungsweise für solche, die nützlicherweise redundant ausgeführt werden, ist es sinnvoll, das Modul selbst mit einer elektronischen Steuerung auszustatten.

Weiterhin ist erfindungsgemäß in dem Modul eine elektronische Steuerung vorgesehen, die Steuerfunktionen der elektronischen Steuerung für die Luftaufbereitungsanlage ergänzt und/oder ersetzt. Auf dieser Grundlage können sich elektronische Steuerungen der einzelnen Einheiten ergänzen, ersetzen und/oder überwachen.

In vorteilhafter Weise ist vorgesehen, dass im Bereich der Flanschverbindung mechanische Mittel vorgesehen sind, die die Verbindung zwischen dem Ventilgehäuse der Luftaufbereitungsanlage und dem Modul örtlich festlegen. Die mechanischen Verbindungen, beispielsweise Passstifte und entsprechende Führungen für diese, stellen sicher, dass die pneumatischen Verbindungen im Bereich der Schnittstelle nach außen zuverlässig abdichten und dass die elektrischen Steckverbindungen nicht in unzulässiger Weise mechanisch belastet werden.

Weiterhin kann nützlich sein, dass die Flanschverbindung direkt zwischen dem Ventilgehäuse und dem Modul vorliegt, das heißt insbesondere ohne Zwischenplatte. Derartige Zwischenplatten zum Verbinden von Modulen sind bekannt. Sie dienen insbesondere dazu, durch geeignete Bohrungen und Kanäle die Strömungswege der Druckluft zwischen den Einheiten zu definieren. Beispielsweise kann man so durch den Einsatz unterschiedlicher Zwischenplatten unterschiedliche pneumatische Wege freigeben beziehungsweise sperren. Im Zusammenhang mit der vorliegenden Erfindung und insbesondere im Hinblick auf die Wartungsfreundlichkeit wird auf eine solche Zwischenplatte verzichtet. Vielmehrwerden die Einheiten, das heißt Luftaufbereitungsanlage und Module direkt mit den Bohrungen und Kanälen ausgestattet, die die geeigneten Verbindungen zur Verfügung stellen.

Der Erfindung liegt die Erkenntnis zugrunde, dass es gelingt, durch das spezielle Integrationskonzept von ELC-Modul, ECPB-Modul und Luftaufbereitungsanlage eine vielseitige Druckluftversorgungseinrichtung zur Verfügung zu stellen, die sich im Hinblick auf ihre Baugröße und Bauform als praktisch erweist und die Grundlage für die Integration zahlreicher Eigenschaften schafft. Im Hinblick auf die Integrationsfähigkeit ist beispielsweise, noch zu erwähnen, dass Anschlüsse der Druckluftversorgungseinrichtung gemeinsam von allen Einheiten genutzt werden können, beispielsweise, um bestimmte Spannungen an hierfürvorgesehen Klemmen anzulegen. Auch können bestimmte elektrische Baugruppen gemeinsam genutzt werden, beispielsweise im Hinblick auf die "on-bord"-Diagnose mit Hilfe des CAN-Busses und die "off-bord"-Diagnose sowie zur seriellen Kommunikation. Es lassen sich gemeinsame Netzteile zur Versorgung der Microcontroller und/oder der Drucksensoren vorsehen. Weiterhin ist eine gemeinsame Schutzbeschaltung der Anschlüsse des Zentralversorgungssteckers möglich.

Die Erfindung wird nun mit Bezug auf die begleitenden Zeichnungen anhand besonders bevorzugter Ausführungsformen beispielhaft erläutert.

Es zeigen:
- Figur 1: eine Seitenansicht eines Nutzfahrzeugs zur Erläuterung der räumlichen Anordnung einer erfindungsgemäßen Druckluftversorgungseinrichtung;
- Figur 2: eine erfindungsgemäße Druckluftversorgungseinrichtung, die in Luftaufbereitungsvorrichtung, ELC-Modul und ECPB-Modul zerlegt ist, sowie daran angeschlossene Komponenten;
- Figur 3: eine erfindungsgemäße Druckluftversorgungseinrichtung mit ELC-Modul und ECPB-Modul zur Erläuterung der Anschlussmöglichkeiten verschiedener weiterer Komponenten;
- Figur 4: ein Ventilgehäuse und ein ECPB-Modul einer erfindungsgemäßen Druckluftversorgungseinrichtung mit verbundener Handsteuereinheit; und

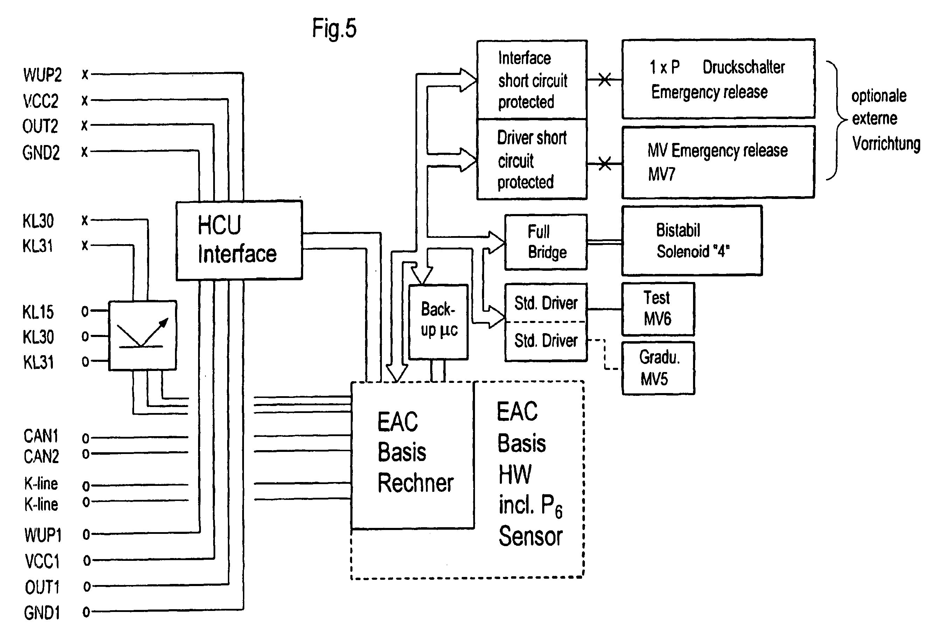

- Figur 5: ein Blockdiagramm zur Erläuterung eines möglichen Funktionskonzeptes.

Bei der nachfolgenden Beschreibung der Zeichnungen bezeichnen gleiche Bezugszeichen gleiche oder vergleichbare Komponenten.

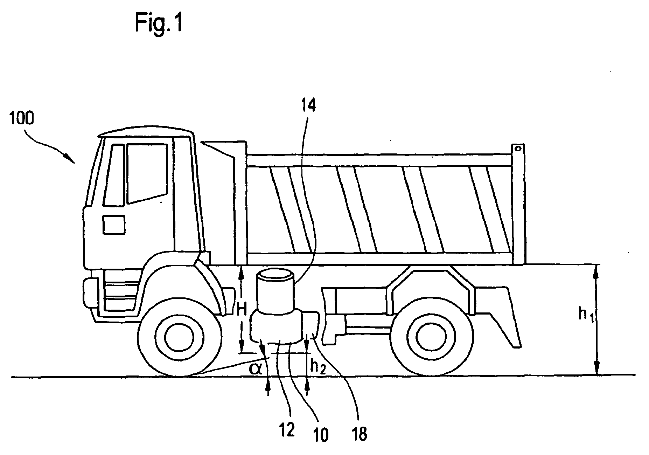

Figur 1 zeigt eine Seitenansicht eines Nutzfahrzeugs 100 zur Erläuterung der räumlichen Anordnung einer erfindungsgemäßen Druckluftversorgungseinrichtung 10. Die maximal zulässige Gerätebauhöhe H ist begrenzt durch die maximal zulässige Rahmenhöhe h₁ des Nutzfahrzeugs und den mindestens erforderlichen Bodenabstand h₂, wobei zur Festlegung dieser größten der Böschungswinkel α des Nutzfahrzeugs zu berücksichtigen ist. Für die maximal zulässige Gerätebauhöhe H gilt H ≤ h₁ - h₂. Die in dem Nutzfahrzeug 100 eingebaute Druckluftversorgungseinrichtung 10 ist mit einem Ventilgehäuse 12 und auf der Oberseite des Ventilgehäuses angeordneter Trocknereinheit 14 ausgestattet. Um die maximale Bauhöhe H nicht zu überschreiten ist ein Zusatzmodul 18 seitlich am Ventilgehäuse 12 angeordnet. Die Verbindung zwischen Zusatzmodul 18 und Luftaufbereitungsanlage 12 erfolgt über eine Flanschverbindung, die eine elektrische und eine pneumatische Schnittstelle zur Verfügung stellt. Dies wird mit Bezug auf die nachfolgenden Zeichnungen deutlich.

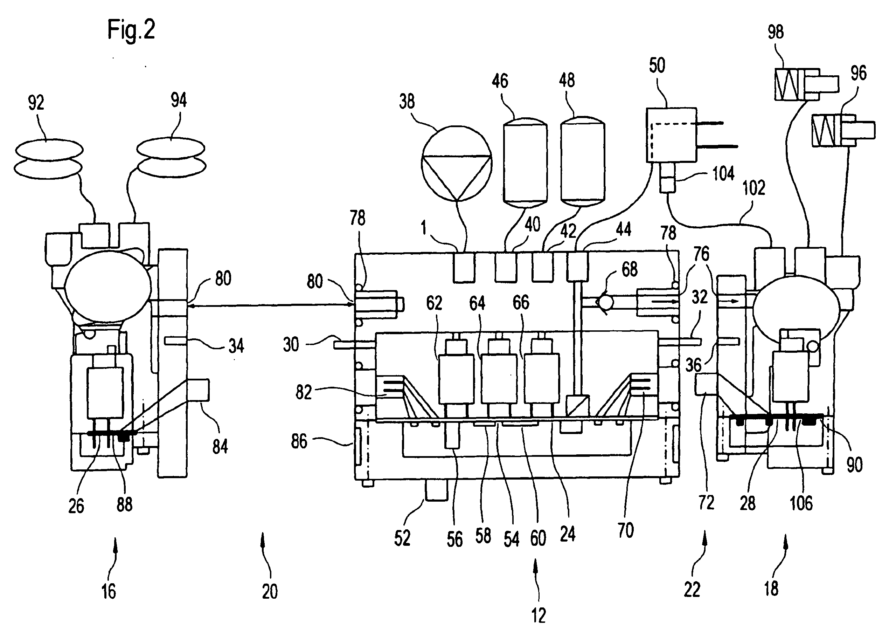

Figur 2 zeigt eine erfindungsgemäße Druckluftversorgungseinrichtung, die in Luftaufbereitungsvorrichtung, ELC-Modul und ECPB-Modul zerlegt ist, sowie daran angeschlossene Komponenten. Das Ventilgehäuse 12 der Luftaufbereitungsanlage hat pneumatische und elektrische Eingänge und Ausgänge, wobei zunächst die Eingänge und Ausgänge erläutert werden, die außerhalb der Flanschverbindungen zu dem ELC-Modul 16 und dem ECPB-Modul 18 liegen. Über einen Drucklufteingang 1 wird von einem Kompressor 38 Druckluft zugeführt. Es sind mehrere Druckluftausgänge 40, 42, 44 vorgesehen, wobei die Druckluft aus den Druckluftausgängen 40, 42 zu Vorratsbehäftem 46,48 der Betriebsbremse geleitet wird. Der Druckluftausgang 44 führt zum Anhängersteuerungsmodul 50. Weiterhin ist ein zentraler elektrischer Stecker52 vorgesehen, über den der Einheit 12 verschiedene Spannungen zuführbar sind und über den Kommunikationssignale austauschbar sind. Innerhalb des Ventilgehäuses 12 ist eine Leiterplatte 54 angeordnet, die die elektronische Steuerung 24 der Luftaufbereitungsanlage beherbergt. Auf der Leiterplatte 54 sitzen verschiedene Komponenten, beispielsweise CAN- und ISO-Schnittstellen 56, ein Netzteil 58, ein zentraler Microcontroller60 sowie verschiedene Magnetventile 62, 64, 66. Es ist weiterhin ein Rückschlagventil 68 vorgesehen, über das Druckluft zum ECPB-Modul 18 überströmen kann.

Dieses Überströmen von Druckluft erfolgt über die pneumatische Schnittstelle im Bereich der Flanschverbindung 22 zwischen Ventilgehäuse 12 und ECPB-Modul 18. Die elektrische Schnittstelle wird durch eine Steckverbindung zur Verfügung gestellt, die aus einem Vaterteil 70 im Ventilgehäuse 12 und einem in einem Gehäusevorsprung angeordneten Mutterteil 72 des ECPB-Moduls besteht. Die Druckluftverbindung 76 zwischen Ventilgehäuse 12 und ECPB-Modul 18 ist durch Dichtungen 78 nach außen abgedichtet.

In vergleichbarer Weise liegt eine pneumatische Verbindung 80 zwischen dem Ventilgehäuse 12 und dem ELC-Modul 16 vor, die ebenfalls über Dichtungen 78 abgedichtet ist. Die elektrische Schnittstelle wird wiederum durch ein Vaterteil 82 und ein Mutterteil 84 gebildet.

Die Schnittstellen im Bereich der Flanschverbindungen 20, 22 können jeweils mehrere elektrische Steckverbindungen und mehrere pneumatische Verbindungen aufweisen. Weiterhin können Luftkanäle im Bereich der Flanschverbindungen vorgesehen sein, wie beispielsweise der im Bereich der Flanschverbdindung 20 zwischen Ventilgehäuse 12 und ELC-Modul 16 vorgesehene Luftkanal 86. Um eine sichere örtliche Fixierung der Flanschverbindungen 20, 22 zur Verfügung zu stellen, sind Fixierstifte 30, 32 und jeweils zugeordnete Führungen 34, 36 vorgesehen, wobei nur beispielhaft jeweils ein Paar solcher Fixiereinrichtungen gezeigt ist.

Das ELC-Modul 16 beherbergt ebenfalls eine Leiterplatte 88, die die elektronische Steuerung des ELC-Moduls trägt. Ebenfalls ist im ECPB-Modul eine Leiterplatte 90 vorgesehen, die die elektronische Steuerung 28 des ECPB-Moduls trägt. Beispielsweise trägt die Leiterplatte 90 einen Microcontroller 106, der Backup-Zwekken dient.

An dem ELC-Modul sind Luftfederbälge 92, 94 angeschlossen, die je nach Auslegung des ELC-Moduls gemeinsam oder getrennt be- und entlüftet werden können.

An dem ECPB-Modul sind Federspeicher-Bremszylinder 96, 98 angeschlossen. Weiterhin ist an dem ECPB-Modul 18 eine Leitung 102 angeschlossen, die zu einem Steuereingang 104 des Anhängersteuermoduls 50 führt. Über diese Leitung 102 kann der Steuereingang des Anhängersteuermoduls 50 unabhängig von dem Zustand der Feststellbremse be- beziehungsweise entlüftet werden.

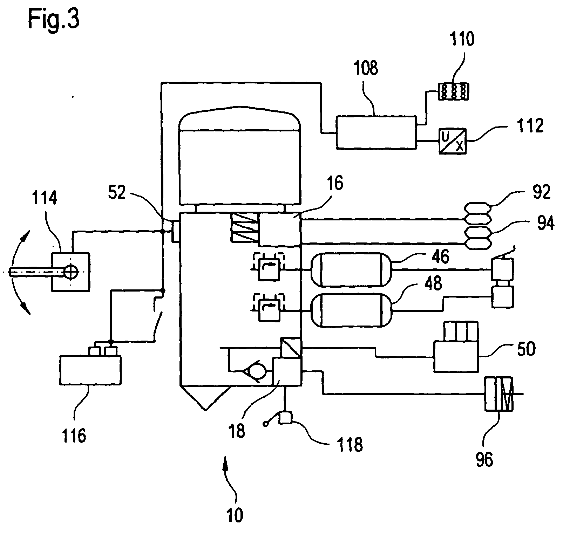

Figur 3 zeigt eine erfindungsgemäße Druckluft-versorgungseinrichtung mit ELC-Modul und ECPB-Modul zur Erläuterung der Anschlussmöglichkeiten verschiedenerweiterer Komponenten. Es sind die verschiedenen Komponenten der Druckluftversorgungseinrichtung dargestellt, die teilweise schon im Zusammenhang mit Figur 2 beschrieben wurden. Zusätzlich sind eine über eine elektronische Steuerung 108 an einen Zentralstecker 52 angeschlossene Fernbedienung für die Luftfederung sowie diverse Sensoren 112 zu erkennen. Die Wegsensoren 114, die ein wichtiges Eingangssignal für die Steuerung der Luftfederung liefern, können direkt über den Zentralstecker 52 angeschlossen sein, wobei die Auswertung der Signale im ELC-Modul 16 erfolgt. Ebenfalls ist es möglich, dass die Steuerung der Luftaufbereitungsanlage Aufgaben der Auswertung übernimmt. Weiterhin ist eine Energieversorgung 116 dargestellt, die ebenfalls über den Zentralstecker 52 mit der Vorrichtung gekoppelt ist. An dem ECPB-Modul 18 ist eine Handsteuereinheit 118 angeschlossen. Über diese sind verschiedene Zustände des Bremssystems einstellbar, insbesondere ein Parkzustand und ein Kontrollzustand, wobei der Kontrollzustand dazu dient, die unabhängige Funktionstüchtigkeit verschiedener dem Zugfahrzeug und dem Anhänger zugeordneter Komponenten der Feststellbremsanlage zu überprüfen.

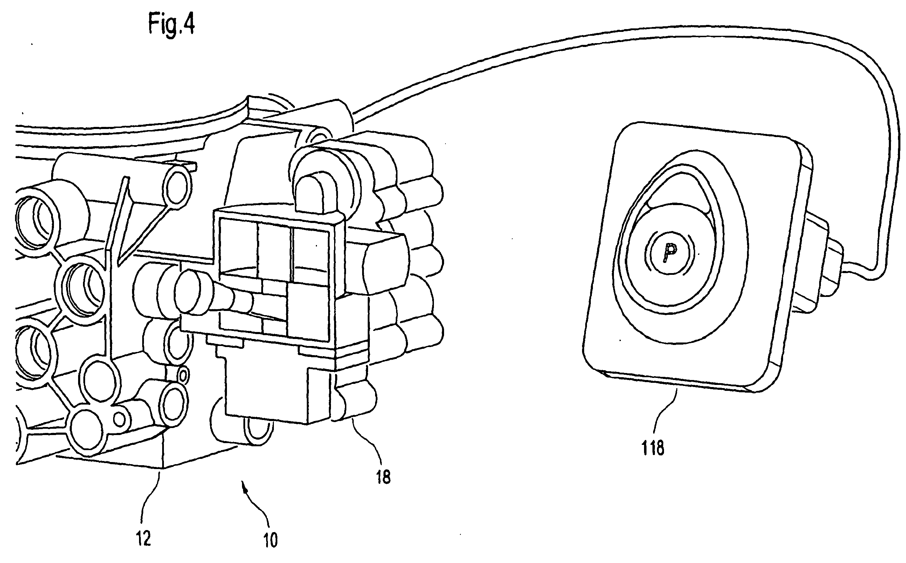

Figur 4 zeigt ein Ventilgehäuse und ein ECPB-Modul einer erfindungsgemäßen Druckluftversorgungseinrichtung 10 mit verbundener Handsteuereinheit 118. Die Druckluftversorgungseinrichtung 10 weist ein Ventilgehäuse 12 für eine Luftaufbereitungsanlage und ein ECPB-Modul 18 auf.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungseinrichtung
- 12: Ventilgehäuse
- 14: Trocknereinheit
- 16: ELC-Modul
- 18: ECPB-Modul
- 20: Flanschverbindung
- 22: Flanschverbindung
- 24: Steuerung
- 28: Steuerung
- 30: Fixierstift
- 32: Fixierstift
- 34: Führung
- 36: Führung
- 38: Kompressor
- 40: Druckluftausgang
- 42: Druckluftausgang
- 44: Druckluftausgang
- 46: Vorratsbehälter
- 48: Vorratsbehälter
- 50: Anhängersteuerungsmodul
- 52: Zentralstecker
- 54: Leiterplatte
- 56: CAN- und ISO-Schnittstellen
- 58: Netzteil
- 60: Microcontroller
- 62: Magnetventil
- 64: Magnetventil
- 66: Magnetventil
- 68: Rückschlagventil
- 70: Vaterteil
- 72: Mutterteil
- 78: Dichtungen
- 80: pneumatische Verbindung
- 82: Vaterteil
- 84: Mutterteil
- 86: Luftkanal
- 88: Leiterplatte
- 90: Leiterplatte
- 92: Luftfederbalg
- 94: Luftfederbalg
- 96: Federspeicher-Bremszylinder
- 98: Federspeicher-Bremszylinder
- 100: Nutzfahrzeug
- 102: Leitung
- 104: Steuereingang
- 106: Microcontroller
- 108: Steuerung
- 112: Sensoren
- 114: Wegsensoren
- 116: Energieversorgung
- 118: Handsteuereinheit

## Patentansprüche

1. Druckluftversorgungseinrichtung (10) mit einer elektronischen Luftaufbereitungsanlage, die ein Ventilgehäuse (12), für das in einem in üblicher Weise in ein Nutzfahrzeug (100) eingebauten Zustand der Luftaufbereitungsanlage eine Oberseite definiert ist, und eine Trocknereinheit (14) umfasst, die auf der Oberseite des Ventilgehäuses (12) angeordnet ist, wobei an dem Ventilgehäuse (12) mindestens ein Modul (16, 18) seitlich über mindestens eine eine pneumatische Schnittstelle zur Verfügung stellende Flanschverbindung (20, 22) angeordnet ist, wobei in dem Modul (16, 18) eine elektronische Steuerung (26, 28) vorgesehen ist, die Steuerfunktionen für das Modul wahrnimmt, wobei die mindestens eine Flanschverbindung (20, 22) auch eine elektrische Schnittstelle zwischen der Luftaufbereitungsanlage und dem mindestens einen Modul (16, 18) zur Verfügung stellt, **dadurch gekennzeichnet, dass** die elektronische Steuerung (26, 28) die Steuerfunktionen der elektronischen Steuerung (24) für die Luftaufbereitungsanlage ergänzt und/oder ersetzt.

2. Druckluftversorgungseinrichtung (10) nach Anspruch 1, **dadurch gekennzeichnet, dass** das Modul ein ELC-Modul (16) ist, das heißt ein Modul für eine elektronische Steuerung einer Luftfederung.

3. Druckluftversorgungseinrichtung (10) nach Anspruch 1 oder 2, **dadurch gekennzeichnet, dass** das Modul ein ECPB-Modul (18) ist, das heißt ein Modul für eine elektronische Steuerung einer Feststellbremse.

4. Druckluftversorgungseinrichtung (10) nach einem der vorhergehenden Ansprüche, **dadurch gekennzeichnet, dass** in dem Ventilgehäuse (12) der Luftaufbereitungsanlage eine elektronische Steuerung (24) vorgesehen ist, die Steuerfunktionen für die Luftaufbereitungsanlage und für das Modul (16, 18) wahrnimmt.

5. Druckluftversorgungseinrichtung (10) nach einem der vorhergehenden Ansprüche, **dadurch gekennzeichnet, dass** im Bereich der Flanschverbindung (20, 22) mechanische Mittel (30, 32, 34, 36) vorgesehen sind, die die Verbindung zwischen dem Ventilgehäuse (12) der Luftaufbereitungsanlage und dem Modul örtlich festlegen.

6. Druckluftversorgungseinrichtung (10) nach einem der vorhergehenden Ansprüche, **dadurch gekennzeichnet, dass** die Flanschverbindung (20, 22) direkt zwischen dem Ventilgehäuse (12) und dem Modul (16, 18) vorliegt, das heißt insbesondere ohne Zwischenplatte.

## Claims

1. Compressed-air supply system (10) comprising an electronic air-processing system including a valve housing (12) for which an upper side is defined in a condition of said air-processing system as installed in the usual manner in a commercial vehicle (100), as well as an air drier unit (14) that is disposed on the upper side of said valve housing (12), wherein at least one module (16, 18) is laterally disposed on said valve housing (12) via at least one flange connecting means (20, 22) providing a pneumatic interface, with an electronic controller (26, 28) being provided in said module (16, 18), which realises the control functions for said module, wherein said at least one flange connecting means (20, 22) provides also an electrical interface between said air-processing system and said at least one module (16, 18), **characterised in that** said electronic controller (26, 28) complements and/or substitutes the control functions of said electronic controller (24) for said air-processing system.

2. Compressed-air supply system (10) according to Claim 1, **characterised in that** said module is an ELC module (16), which means a module for an electronic controller of an air-suspension system.

3. Compressed-air supply system (10) according to Claim 1 or Claim 2, **characterised in that** said module is an ECPB module (18), which means a module for an electronic controller of a parking brake.

4. Compressed-air supply system (10) according to any of the preceding Claims, **characterised in that** an electronic controller (24) is provided in said valve housing (12) of said air-processing system, which realises the control functions for said air-processing system and for said module (16, 18).

5. Compressed-air supply system (10) according to any of the preceding claims, **characterised in that** mechanical means (30, 32, 34, 36) are provided in the region of said flange connecting means (20, 22), which provide a local fixation of the connection between said valve housing (12) of said air-processing system and said module.

6. Compressed-air supply system according to any of the preceding Claims, **characterised in that** said flange connecting means (20, 22) is provided directly between said valve housing (12) and said module (16, 18), which means without any intermediate plate, in particular.

## Revendications

1. Dispositif (10) d'alimentation en air comprimé, comprenant une installation électronique de traitement de l'air, qui comprend un corps (12) de vanne, pour lequel, dans un état de l'installation de traitement de l'air incorporé dans un véhicule (100) utilitaire, est défini un côté supérieur, et une unité (14) de sécheur, qui est disposée du côté supérieur du corps (12) de vanne, dans lequel sur le corps (12) de vanne est disposé au moins un module (16, 18) latéralement par au moins une liaison (20, 22) par bride mettant à disposition une interface pneumatique, dans lequel il est prévu dans le module (16, 18) une commande (26, 28) électronique, qui prend en charge des fonctions de commande du module, la au moins une liaison (20, 22) par bride mettant aussi à disposition une interface électrique entre l'installation de traitement de l'air et le au moins un module (16, 18), **caractérisé en ce que** la commande (26, 28) électronique complète et/ou remplace les fonctions de commande de la commande électronique de l'installation de traitement de l'air.

2. Dispositif (10) d'alimentation en air comprimé suivant la revendication 1, **caractérisé en ce que** le module est un module (16) ELC, c'est-à-dire un module pour une commande électronique d'une suspension pneumatique.

3. Dispositif (10) d'alimentation en air comprimé suivant la revendication 1 ou 2, **caractérisé en ce que** le module est un module (18) ECPB, c'est-à-dire un module pour une commande électronique d'un frein de stationnement.

4. Dispositif (10) d'alimentation en air comprimé suivant l'une des revendications précédentes, **caractérisé en ce que** dans le corps (12) de vanne de l'installation de traitement de l'air est prévue une commande (24) électronique, qui prend en charge des fonctions de commande de l'installation de traitement de l'air et du module (16, 18).

5. Dispositif (10) d'alimentation en air comprimé suivant l'une des revendications précédentes, **caractérisé en ce que** dans la partie de la liaison (20, 22) par bride sont prévus des moyens (30, 32, 34, 36) mécaniques, qui fixent localement la liaison entre le corps (12) de vanne de l'installation de traitement de l'air et le module.

6. Dispositif (10) d'alimentation en air comprimé suivant l'une des revendications précédentes, **caractérisé en ce que** la liaison (20, 22) par bride se trouve directement entre le corps (12) de vanne et le module (16, 18), c'est-à-dire notamment sans plaque intermédiaire.
